# EUROPEAN PATENT SPECIFICATION

(11) **EP 2 762 005 B1**
(45) Date of publication and mention of the grant of the patent: **05.10.2016**
(21) Application number: 14152725.9
(22) Date of filing: 27.01.2014
(51) Int. Cl.: A21C 3/06

(54) **Line for treating rolled food products**
Behandlungsstrasse für gerollte Lebensmittelprodukte
Ligne de traitement de produits alimentaires roulés

(30) Priority: 05.02.2013 IT VR20130030
(43) Date of publication of application: 06.08.2014
(73) Proprietor: RONDO SCHIO S.R.L., 36015 SCHIO (VI) (IT)
(72) Inventor: Scalzeri, Andrea, 36010 ROANA, Fraz. Camporovere VI (IT)
(74) Representative: Modiano, Micaela Nadia

(56) References cited:
- EP-A1- 0 327 856
- EP-A1- 2 529 629
- EP-B1- 1 256 279
- DE-A1- 4 402 346

## Description

The present invention relates to a line for treating rolled food products, in particular, a line for obtaining croissants.

Nowadays, production lines for food products, such as for example croissants, use, for rolling up the dough, static means that generally act as a barrier to slow down the dough shapes, in this manner rolling it up.

One widely-used example of such static means is represented by a portion of belt or of metallic net which is arranged above the conveyor belt carrying the strips of dough which are cut to measure.

For the croissant production lines, the dough is cut into triangles; such triangles, which are oriented with the base facing the direction of advancement, are conveyed by a continuously-moving belt and are forced to touch, in an upward region, a portion of the belt or of the metallic net, in this manner triggering the rolling-up.

Such systems, although they appear simple, are not devoid of drawbacks.

Firstly, they do not ensure the ideal conditions for a correct, and especially homogeneous, rolling-up, which is essential for industrial production.

In fact, in the production of croissants and of filled products in general, if even a single product that has already been filled is not rolled up correctly and completely, conditions are generated for an immediate jamming of the devices downstream of the line and for the fouling thereof, with the consequent necessity of a machine shutdown in order to carry out cleaning and restoration operations.

Furthermore such rolling-up system, being static, does not allow any adjustment to vary the characteristics (size, thickness, elasticity) of the strip of dough being processed.

In order to overcome the above-mentioned drawbacks, mechanical devices with a dynamic effect have been proposed for rolling up dough.

In general such devices are constituted by disks, by rotors or by belts, which are brought adjacent and which counter-rotate with respect to the advancement of the strip of dough, and are positioned, like the static means described previously, above the conveyor belt carrying the strip.

Such "dynamic" devices thus pair the advancement movement of the strip of dough, determined by the conveyor belt, with the movement of the disk, of the counter-rotating rotor or of the belts brought adjacent.

An additional example of a dynamic device is described in EP 1256279 B1 in the name of the same applicant, which relates to a line for processing food products, particularly for producing croissants, which comprises a device for cutting a strip of dough into suitable shapes, a device for positioning and aligning the shapes, and a conveyor belt.

The line has, furthermore, a device for rolling up the shapes, which comprises a redirection element that is arranged at a discontinuity of the conveyor belt and is adapted to execute a movement between a condition of engagement and a position of disengagement with the edge of the shapes that is oriented in the advancement direction.

The advancement device also comprises a rolling-up element, which is positioned above the conveyor belt and is designed to execute, as a function of the movement of the redirection element, an excursion downward from above.

The movement of the redirection element is obtained, typically, by means of a motor that is associated with a rod-and-crank assembly which, evidently, causes a fixed stroke of the redirection element, a stroke that depends essentially on the kinematics of the rod-and-crank assembly used.

The rolling-up station, in EP 1256279 B1, is formed by the combination of positions of the three elements:
- a conveyor belt;
- a redirection element;
- a rolling-up element.

The ideal rolling-up conditions for each specific product are determined by modification of the various parameters in play, and in particular:
- the speed of the three forming elements,
- the lifting of the redirection element,
- the position and inclination of the rolling-up element.

These devices, although being on average more effective than the static means, do however have some drawbacks which are linked especially to the limitations in the adjustment of the action of the redirection element, which does not, as a consequence, make it possible to correctly calibrate the device and easily keep track of the different characteristics (thickness, size, elasticity etc.) of the strips of dough that can be treated in each instance by the treatment line.

EP 0 327 856 A1 discloses a rolling machine for producing croissants comprising a large-diameter rotating cylinder cooperating with a conveyor belt feeding triangles of dough thereto. Arranged after the large-diameter cylinder are a lower rolling and unloading belt and an upper rolling belt, arranged mutually opposite to form a seat with sliding walls in which the triangles of dough are rolled and the croissants are formed. The lower rolling and unloading belt is stretched about a return blade, arranged adjacent the large-diameter cylinder, the return blade being selectively oscillated between a highly upwardly inclined position, for rolling and forming the croissant, and a less inclined position for sending the croissant towards the output of the machine. The dimension of the seat defined between the unloading belt and the upper rolling belt is adjustable by means of hand-actuated lever systems and connected to a rod of the return blade.

DE 44 02 346 A1 discloses a device for rolling-up a strip of dough arranged at the end of transport belt, the rolling-up device comprising a group of rollers rotatably secured in a common adjustment support that is pivotable and between a winding position and an ejecting position relative to the end of the transport belt.

The aim of the present invention is to eliminate, or at least drastically reduce, the above-mentioned drawbacks in conventional types of treatment lines of rolled food products.

In particular, within this aim, an object of the present invention is to make available a line for treating rolled food products that makes it possible to adjust the operation of the redirection element.

Another object of the present invention is to provide a line for treating rolled food products which is extremely reliable.

Another object of the invention is to devise a line for treating rolled food products which is low-cost, so as to make its use advantageous from an economic viewpoint as well.

This aim and these and other objects which will become more apparent hereinafter are all achieved by a line for treating rolled food products according to claim 1.

Further characteristics and advantages of the invention will become more apparent from the description of a number of preferred but not exclusive embodiments of a line for treating rolled food products according to the invention, which are illustrated by way of non-limiting example in the accompanying drawings wherein:

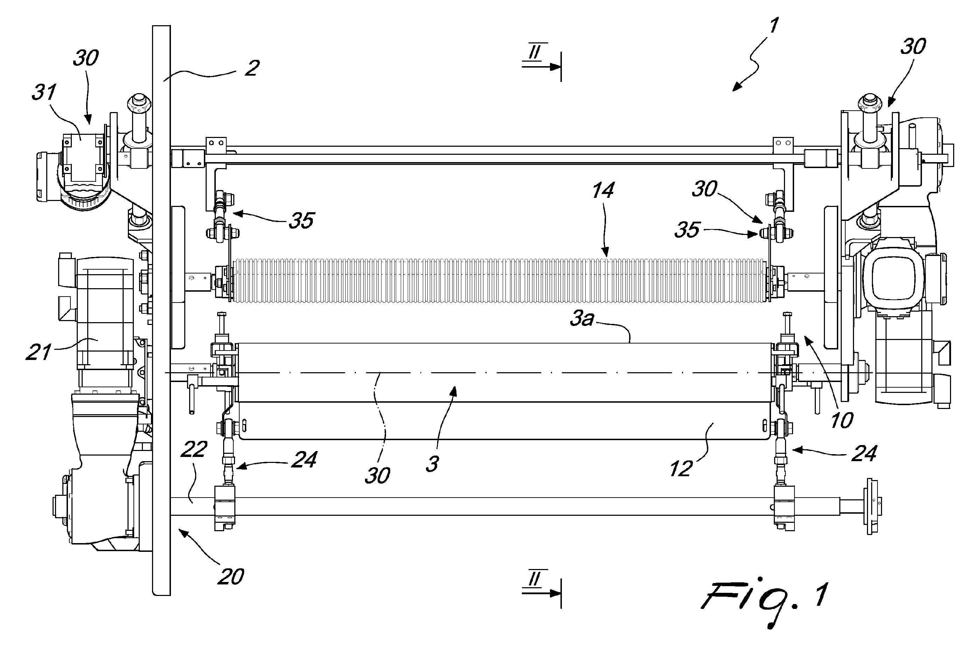

- Figure 1 is a view from behind of a line for treating rolled food products;
- Figures 2 and 3 are cross-sections along a longitudinal plane, identified by the line II-II in Figure 1, of the rolling-up device in which the redirection element and the rolling-up element are arranged, respectively, in the disengagement position and in the engagement position.

In the embodiments illustrated, individual characteristics shown in relation to specific examples may in reality be interchanged with other, different characteristics, existing in other embodiments.

With reference to the figures, the present invention relates to a line, generally indicated with the reference numeral 1, for treating rolled food products.

The line 1 comprises a fixed framework 2 which supports at least one conveyor belt 3 for at least one food product 4 to be treated.

The conveyor belt 3 can move, in order to advance the food products 4 to be treated, with respect to the fixed framework 2, along a movement direction 100 that is substantially parallel to its longitudinal direction.

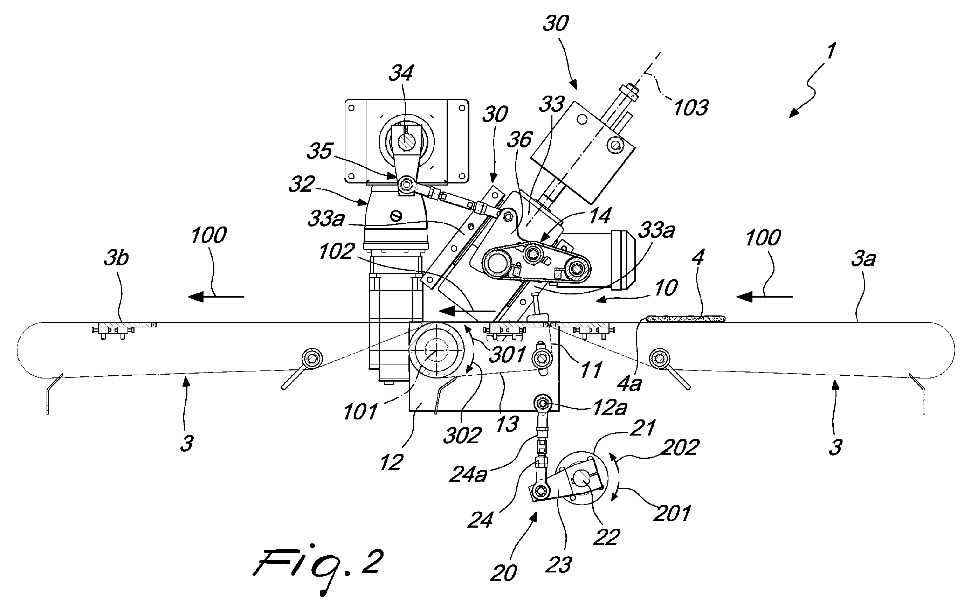

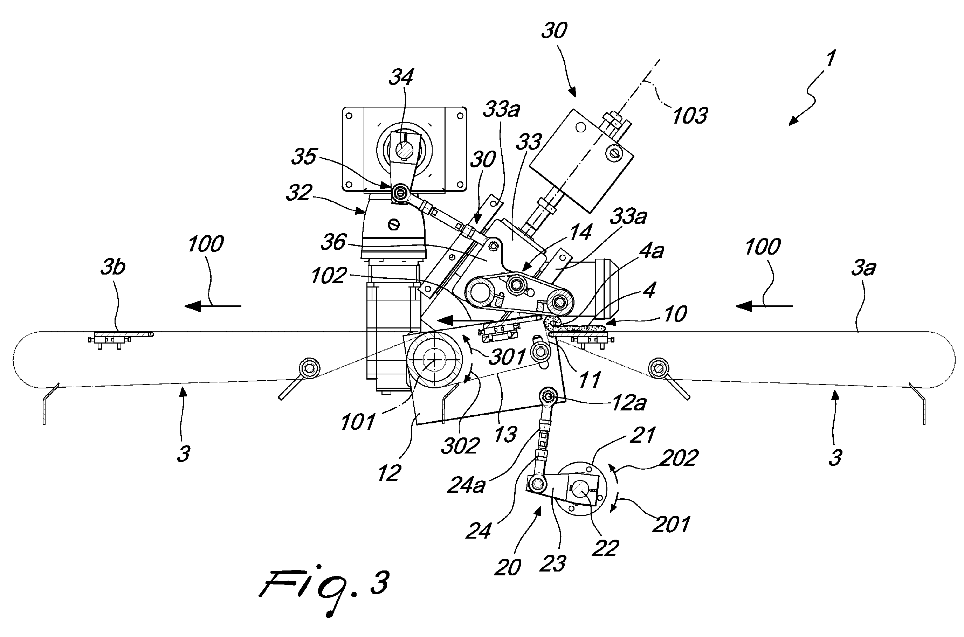

Along the treatment line 1 there is a rolling-up device 10 that comprises a redirection element 11 that is arranged at a discontinuity of the conveyor belt 3 and is adapted to execute a movement between an engagement position (shown in Figure 3) and a disengagement position (shown in Figure 2) with the edge 4a of the food products 4 that is oriented in the advancement direction.

The rolling-up device 10 furthermore comprises, above the redirection element 11, at least one rolling-up element 14 that is adapted to cooperate with the redirection element 11 in order to achieve the rolling-up of the food product 4.

According to the present invention, the line 1 comprises means 20 for adjusting the degree of the movement of the redirection element 11 between the engagement position and the disengagement position.

According to the invention, the redirection element 11 comprises a supporting framework 12 associated with a redirection belt 13.

The supporting framework 12 can move, with respect to the fixed framework 2, with an oscillating motion about an oscillation axis 101 that is arranged transversely with respect to the movement direction 100 in order to move the redirection element 11 alternately between the engagement position and the disengagement position and vice versa.

The adjustment means 20 are, adapted to adjust the degree of the oscillation angle of the supporting framework 12 about the oscillation axis 101.

With reference to the practical embodiment shown in the figures, the conveyor belt 3 comprises a first conveyor belt and a second conveyor belt 3a and 3b which are arranged, respectively, upstream and downstream of the redirection belt 13.

According to the invention, the redirection belt 13 has a closed extension and can move, with respect to the supporting framework 12, along an advancement direction 102 that is parallel to and has the same direction as the movement direction 100 of the conveyor belt 3.

Conveniently, the oscillation axis 101 is arranged in a position proximate to the second conveyor belt 3b.

The treatment line 1 is furthermore provided with means 30 for moving the rolling-up element 14 with respect to the fixed framework 2.

According to the invention, control means are provided, not shown, which are adapted to act on the movement means 30 in order to determine the position of the rolling-up element 14 with respect to the fixed framework 2 as a function of the position of the redirection element 11.

For the purposes of example, the movement means 30 can be constituted by a block 33 for supporting the rolling-up element 14, which is fitted so that it can slide along a sliding guide 33a and can move, thanks to the action of a first motor 31, along a first direction of motion 103 defined by the aforementioned sliding guide 33a.

Advantageously, the first direction of motion 103 is inclined with respect to the movement direction 100.

In order to enable a further degree of adjustment of the position of the rolling-up element 14, the latter is rotatably supported by the supporting block 33.

In this case, there is a second motor 32 whose output shaft 34 is connected, by means of a kinematic mechanism of the rod-and-crank type 35, to a plate 36 for supporting the rolling-up element 14 which is in turn rotatably supported by the supporting block 33.

It should be noted that, in order to also adjust the position of the rolling-up element 14, adjustment means 20 similar to those described below can be used.

According to a preferred embodiment, the adjustment means 20 comprise an electric motor 21, which is optionally associated with a reduction gear, and is provided with an output shaft 22 that can be actuated in two mutually opposite directions of rotation 201 and 202.

Specifically, the actuation in a first direction 201 of the output shaft 22 causes the oscillation of the supporting framework 12 in a first oscillation direction 301, whereas the actuation in the direction 202 opposite to the first direction 201 of the output shaft 22 causes the oscillation of the supporting framework 12 in the other oscillation direction 302.

Conveniently, the adjustment means 20 are adapted to vary the rotation angle of the output shaft 22 in each one of the two directions of rotation 201 and 202.

The output shaft 22 is connected kinematically to an engagement portion 12a that is defined on the supporting framework 12 by means of a rod-and-crank assembly 23 and 24.

In order to ensure a perfect adjustment of the position of the redirection element 11, there is, on each side of the line 1, a rod-and-crank assembly 23 and 24 and, on each crank 24, a body for adjusting its length 24a which is adapted to enable a perfect alignment of the upper edges of the redirection element 11.

All the characteristics of the invention, indicated above as advantageous, convenient or similar, may also be missing or be substituted by equivalent characteristics.

The invention, thus conceived, is susceptible of numerous modifications and variations, all of which are within the scope of the appended claims.

In practice it has been found that in all the embodiments the invention has achieved the intended aim and objects.

A first advantage of the solution of the new patent application is a result of implementing the different system for lifting the redirection element 11. Other than in conventional solutions, which involved for example lifting all of the belt of the redirector, in the new invention a redirection belt is adopted that is pivoted at one point and can be lifted from the other.

This contrivance, which is also applied to the rolling-up element, enables a considerable reduction of the masses in motion and a consequent decrease in the inertias and vibrations in play.

The net effect of all this is a possible considerable increase in the performance levels of the machine.

A second advantage is being able to easily control and adjust the shape of the station for rolling up the product.

In fact, since the new forming elements can be moved with electric motors, it is easy to determine their most suitable position and inclination, which is applicable for the individual product in use.

In addition to this, the new invention offers a third possibility for improvement: the possibility of storing and calling up on an operating panel the various settings adopted for the individual formats to be produced, and being able to easily vary all the parameters for using the machine (for example: position, angle of incidence and speed of the elements for forming the rolled-up product).

Another advantage offered by the new invention is the possibility of executing particular rolling-up cycles that allow the performing of various functions, such as:
- performing rapid movements of the forming elements so as to quickly free up the product formation region and enable, for example, rapid intervention for product removal or freeing from unnecessary obstructions during the steps of cleaning and sanitizing the machine;
- executing rapid positioning moves in the operating positions stored for each product and reducing the machine preparation times.

Another advantage of the new system is the possibility of executing controlled rolling-up cycles, i.e. modifying the position and inclination of the forming and rolling-up elements, so as to always keep the product being formed in contact with these elements, as the rolled-up product grows in size in the rolling-up station.

This system brings considerable advantages in controlling the "closing" of the final product. With this type of control and with speed control, rolled-up products can be obtained that are more or less dense, with the rolling-up turns more closed or more open.

Products with high numbers of turns and rolled-up products of considerable size will also be more amenable to control.

In practice the materials employed as well as the dimensions may be any according to requirements.

Moreover, all the details may be substituted by other, technically equivalent elements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A line (1) for treating rolled food products, comprising a fixed framework (2) that supports at least one conveyor belt (3) for at least one food product to be treated, said conveyor belt (3) being movable with respect to said fixed framework (2) along a movement direction (100) that is substantially parallel to its longitudinal direction (101), along said treatment line (1) a rolling-up device (10) being provided that comprises a redirection element (11), which is arranged at a discontinuity of said conveyor belt (3) and is adapted to perform a movement between an engagement position and a disengagement position with respect to the edge (4a) of said food products (4) that is oriented in the advancement direction, said rolling-up device (10) furthermore comprising, above said redirection element (11), at least one rolling-up element (14) that is adapted to cooperate with said redirection element (11) in order to roll up said food product (4), the line further comprising means (20) for adjusting the degree of the movement of said redirection element (11) between said engagement position and said disengagement position, said redirection element (11) comprising a supporting framework (12) that is associated with a redirection belt (13), said supporting framework (12) being movable, with respect to said fixed framework (2), with an oscillating motion about an oscillation axis (101) that is arranged transversely with respect to said movement direction (100) in order to move said redirection element (11) alternately between said engagement position and said disengagement position and vice versa, said conveyor belt (3) comprising a first conveyor belt (3a) and a second conveyor belt (3b), which are arranged respectively upstream and downstream of said redirection belt (13), said redirection belt (13) having a closed extension and being movable, with respect to said supporting framework (12), in an advancement direction (102) that is parallel to and has the same direction as the movement direction (100) of said conveyor belt (3), and further comprising means (30) for moving said rolling-up element (14) with respect to said fixed framework (2), control means being provided which are adapted to act on said movement means (30) in order to determine the position of said rolling-up element (14) with respect to said fixed framework (2) as a function of the position of said redirection element (11).

2. The treatment line (1) according to claim 1, **characterized in that** said adjustment means (20) are adapted to adjust the degree of the oscillation angle of said supporting framework (12) about said oscillation axis (101).

3. The treatment line (1) according to one or more of the preceding claims, **characterized in that** said oscillation axis (101) is arranged in a position that is adjacent to said second conveyor belt (3b).

4. The treatment line (1) according to one or more of the preceding claims, **characterized in that** said adjustment means (20) comprise an electric motor (21) provided with an output shaft (22) that can be actuated in two directions of rotation (201, 202) that are mutually opposite and is connected kinematically to said supporting framework (12), the actuation of said output shaft (22) in a first direction (201) causing the oscillation of said supporting framework (12) in a first oscillation direction (301) and the actuation of said output shaft (22) in a direction (202) opposite to said first direction (201) causing the oscillation of said supporting framework (12) in the other oscillation direction (302).

5. The treatment line (1) according to claim 4, **characterized in that** said adjustment means (20) are adapted to vary the rotation angle of said output shaft (22) in each one of the two directions of rotation (201, 202).

6. The treatment line (1) according to claim 5, **characterized in that** said output shaft (22) is connected kinematically to an engagement portion (12a) that is defined on said supporting framework (12) by way of a rod-and-crank assembly (23, 24).

## Patentansprüche

1. Eine Linie (1) zur Behandlung gerollter Lebensmittelprodukte, die einen festen Rahmen (2) umfasst, der mindestens ein Förderband (3) für mindestens ein zu behandelndes Lebensmittelprodukt trägt, wobei das Förderband (3) im Verhältnis zu dem festen Rahmen (2) entlang einer Bewegungsrichtung (100) beweglich ist, die im Wesentlichen parallel zu seiner Längsrichtung (101) ist, wobei entlang der Behandlungslinie (1) eine Aufrollvorrichtung (10) angebracht ist, die ein Umlenkelement (11) umfasst, welches an einer Diskontinuität des Förderbandes (3) angeordnet und ausgebildet ist, um eine Bewegung zwischen einer Eingriffsposition und einer Löseposition mit Bezug auf die Kante (4a) der Lebensmittelprodukte (4) durchzuführen, die in die Vorschubrichtung ausgerichtet ist, wobei die Aufrollvorrichtung (10) weiter oberhalb des Umlenkelements (11) mindestens ein Aufrollelement (14) umfasst, das ausgebildet ist, um mit dem Umlenkelement (11) zusammenzuwirken, um das Lebensmittelprodukt (4) aufzurollen, wobei die Linie weiter Mittel (20) zur Einstellung des Grades der Bewegung des Umlenkelements (11) zwischen der Eingriffsposition und der Löseposition umfasst, und wobei das Umlenkelement (11) einen Stützrahmen (12) umfasst, welcher mit einem Umlenkband (13) verbunden ist, wobei der Stützrahmen (12) im Verhältnis zu dem festen Rahmen (2) mit einer schwingenden Bewegung um eine Schwingachse (101) beweglich ist, die quer zu der Bewegungsrichtung (100) angeordnet ist, um das Umlenkelement (11) abwechselnd zwischen der Eingriffsposition und der Löseposition und umgekehrt zu bewegen, wobei das Förderband (3) ein erstes Förderband (3a) und ein zweites Förderband (3b) umfasst, welche stromaufwärts beziehungsweise stromabwärts von dem Umlenkband (13) angeordnet sind, wobei das Umlenkband (13) eine geschlossene Ausdehnung hat und im Verhältnis zu dem Stützrahmen (12) in eine Vorschubrichtung (102) beweglich ist, die parallel zu der Bewegungsrichtung (100) des Förderbandes (3) ist und dieselbe Ausrichtung wie diese hat, und weiter Mittel (30) zum Bewegen des Aufrollelements (14) im Verhältnis zu dem festen Rahmen (2) umfassend, wobei Kontrollmittel bereitgestellt sind, die ausgebildet sind, um auf die Bewegungsmittel (30) einzuwirken, um die Position des Aufrollelements (14) im Verhältnis zu dem festen Rahmen (2) in Abhängigkeit von der Position des Umlenkelements (11) zu bestimmen.

2. Die Behandlungslinie (1) gemäß Anspruch 1, **dadurch gekennzeichnet, dass** die Einstellmittel (20) ausgebildet sind, um den Grad des Schwingungswinkels des Stützrahmens (12) um die Schwingachse (101) einzustellen.

3. Die Behandlungslinie (1) gemäß einem oder mehreren der obigen Ansprüche, **dadurch gekennzeichnet, dass** die Schwingachse (101) in einer Position angeordnet ist, die an das zweite Förderband (3b) angrenzt.

4. Die Behandlungslinie (1) gemäß einem oder mehreren der obigen Ansprüche, **dadurch gekennzeichnet, dass** die Einstellmittel (20) einen Elektromotor (21) umfassen, ausgestattet mit einer Abtriebswelle (22), die in zwei Drehrichtungen (201, 202) angetrieben werden kann, welche einander gegenüberliegen, und kinematisch mit dem Stützrahmen (12) verbunden ist, wobei die Aktivierung der Abtriebswelle (22) in eine erste Richtung (201) die Schwingung des Stützrahmens (12) in eine erste Schwingungsrichtung (301) auslöst und die Aktivierung der Abtriebswelle (22) in eine Richtung (202) entgegengesetzt der ersten Richtung (201) die Schwingung des Stützrahmens (12) in die andere Schwingungsrichtung (302) auslöst.

5. Die Behandlungslinie (1) gemäß Anspruch 4, **dadurch gekennzeichnet, dass** die Einstellmittel (20) ausgebildet sind, um den Drehwinkel der Abtriebswelle (22) in jede der zwei Drehrichtungen (201, 202) zu variieren.

6. Die Behandlungslinie (1) gemäß Anspruch 5, **dadurch gekennzeichnet, dass** die Abtriebswelle (22) über ein Kurbelwellengestänge (23, 24) kinematisch mit einem Eingriffsabschnitt (12a) verbunden ist, der an dem Stützrahmen (12) bestimmt ist.

## Revendications

1. Ligne (1) pour traiter des produits alimentaires roulés, comprenant un châssis fixe (2) qui supporte au moins une courroie transporteuse (3) pour au moins un produit alimentaire à traiter, ladite courroie transporteuse (3) étant mobile par rapport audit châssis fixe (2) le long d'une direction de déplacement (100) qui est sensiblement parallèle à sa direction longitudinale (101), le long de ladite ligne de traitement (1), on prévoit un dispositif d'enroulement (10) qui comprend un élément de redirection (11) qui est agencé au niveau d'une discontinuité de ladite courroie transporteuse (3) et est adapté pour réaliser un mouvement entre une position de mise en prise et une position de dégagement par rapport au bord (4a) desdits produits alimentaires (4) qui est orienté dans la direction d'avancement, ledit dispositif d'enroulement (10) comprenant en outre, au-dessus dudit élément de redirection (11), au moins un élément d'enroulement (14) qui est adapté pour coopérer avec ledit élément de redirection (11) afin d'enrouler ledit produit alimentaire (4), la ligne comprenant en outre des moyens (20) pour ajuster le degré de déplacement dudit élément de redirection (11) entre ladite position de mise en prise et ladite position de dégagement, ledit élément de redirection (11) comprenant un châssis de support (12) qui est associé à une courroie de redirection (13), ledit châssis de support (12) étant mobile, par rapport audit châssis fixe (2), avec un mouvement d'oscillation autour d'un axe d'oscillation (101) qui est agencé transversalement par rapport à ladite direction de déplacement (100) afin de déplacer ledit élément de redirection (11) de manière alternée entre ladite position de mise en prise et ladite position de dégagement et vice versa, ladite courroie transporteuse (3) comprenant une première courroie transporteuse (3a) et une seconde courroie transporteuse (3b) qui sont respectivement agencées en amont et en aval de ladite courroie de redirection (13), ladite courroie de redirection (13) ayant une extension fermée et étant mobile, par rapport audit châssis de support (12), dans une direction d'avancement (102) qui est parallèle à et a la même direction que la direction de déplacement (100) de ladite courroie transporteuse (3) et comprenant en outre des moyens (30) pour déplacer ledit élément d'enroulement (14) par rapport audit châssis fixe (2), des moyens de commande étant prévus qui sont adaptés pour agir sur lesdits moyens de déplacement (30) afin de déterminer la position dudit élément d'enroulement (14) par rapport audit châssis fixe (2) en fonction de la position dudit élément de redirection (11).

2. Ligne de traitement (1) selon la revendication 1, **caractérisée en ce que** lesdits moyens d'ajustement (20) sont adaptés pour ajuster le degré de l'angle d'oscillation dudit châssis de support (12) autour dudit axe d'oscillation (101).

3. Ligne de traitement (1) selon une ou plusieurs des revendications précédentes, **caractérisée en ce que** ledit axe d'oscillation (101) est agencé dans une position qui est adjacente à ladite seconde courroie transporteuse (3b).

4. Ligne de traitement (1) selon une ou plusieurs des revendications précédentes, **caractérisée en ce que** lesdits moyens d'ajustement (20) comprennent un moteur électrique (21) prévu avec un arbre de sortie (22) qui peut être actionné dans deux directions de rotation (201, 202) qui sont mutuellement opposées et est raccordé, par voie cinématique, audit châssis de support (12), l'actionnement dudit arbre de sortie (22) dans une première direction (201) provoquant l'oscillation dudit châssis de support (12) dans une première direction d'oscillation (301) et l'actionnement dudit arbre de sortie (22) dans une direction (202) opposée à ladite première direction (201) provoquant l'oscillation dudit châssis de support (12) dans l'autre direction d'oscillation (302).

5. Ligne de traitement (1) selon la revendication 4, **caractérisée en ce que** lesdits moyens d'ajustement (20) sont adaptés pour modifier l'angle de rotation dudit arbre de sortie (22) dans l'une des deux directions de rotation (201, 202).

6. Ligne de traitement (1) selon la revendication 5, **caractérisée en ce que** ledit arbre de sortie (22) est raccordé, par voie cinématique, à une partie de mise en prise (12a) qui est définie sur ledit châssis de support (12) au moyen d'un ensemble bielle et manivelle (23, 24).
